# EUROPÄISCHE PATENTSCHRIFT

(11) **EP 1 426 219 B1**
(45) Veröffentlichungstag und Bekanntmachung des Hinweises auf die Patenterteilung: **13.09.2006**
(21) Anmeldenummer: 03025107.8
(22) Anmeldetag: 31.10.2003
(51) Int. Cl.: B60J 7/00, B60J 1/20, E06B 9/42

(54) **Rollosystem, insbesondere für ein Sonnendach**
Roll type closure, preferably for a sun roof
Fermeture roulante, notamment pour toit ouvrant

(30) Priorität: 05.12.2002 DE 10256929
(43) Veröffentlichungstag der Anmeldung: 09.06.2004
(73) Patentinhaber: ArvinMeritor GmbH, 63128 Dietzenbach (DE)
(72) Erfinder: Biewer, Christian, 64839 Münster (DE)
(74) Vertreter: Sties, Jochen

(56) Entgegenhaltungen:
- DE-A- 19 639 478
- DE-A- 19 739 919
- DE-C- 19 750 713
- DE-C- 19 844 779
- US-A- 6 012 505
- US-A1- 2002 069 980

## Beschreibung

Die Erfindung betrifft ein Rollosystem mit einem ersten Rollo, einem zweiten Rollo und einem Wickelkörper, auf dem die beiden Rollos übereinanderliegend aufgenommen werden können, wobei die Ränder der Rollos relativ zur Drehachse des Wickelkörpers in axialer Richtung gegeneinander versetzt sind.

Ein solches Rollosystem ist aus der US-A-2002/0069980 bekannt. Die Überdeckung der beiden Rollos ist veränderbar, so daß das Rollosystem auf verschiedene Breiten eingestellt werden kann. Das Rollosystem dient zur Verschattung an einer Frontscheibe eines Kraftfahrzeugs.

Ein Rollosystem für ein Dach eines Kraftfahrzeugs ist aus der deutschen Patentschrift 197 50 713 bekannt. Die beiden Rollos werden auf dem Wickelkörper kongruent zueinander liegend aufgenommen. Es handelt sich dabei um Rollos, die nur an ihren Vorderrändern geführt sind; eine seitliche Führung ist nicht vorgesehen.

Es sind auch Rollos bekannt, die seitlich geführt werden (siehe beispielsweise die deutsche Offenlegungsschrift 197 39 919). Das Rollo weist ein Kantenband auf, das sich entlang dem Rand des Rollos erstreckt und in einer Führung aufgenommen ist.

Es ist aber bisher nicht möglich, zwei Rollos mit Kantenband auf einem einzigen Wickelkörper aufzunehmen, da dann die beiden Kantenbänder der Rollos übereinander liegen würden. Dies ergäbe einen derart dicken Wickel, daß die Funktionsfähigkeit beeinträchtigt wäre und der benötigte Bauraum unnötig groß wäre.

Die Aufgabe der Erfindung besteht darin, ein kompaktes Rollosystem zu schaffen, bei dem zwei Rollos, die seitlich geführt werden können, auf einem einzigen Wickelkörper aufgenommen werden können.

Zu diesem Zweck ist erfindungsgemäß bei einem Rollosystem der eingangs genannten Art vorgesehen, daß für jeden Rand eines Rollos eine Führung vorgesehen ist. Durch den Versatz der Ränder ist verhindert, daß das Kantenband des einen Rollos über dem Kantenband des anderen Rollos zu liegen kommt. Es wird dadurch verhindert, daß die beiden Kantenbänder stark auftragen, wenn die beiden Rollos auf dem Wickelkörper aufgewickelt werden. Durch die Führungen ist gewährleistet, daß die Ränder präzise gehalten werden.

Die beiden Rollos könnten mit gleicher Breite ausgeführt sein, aber gegeneinander versetzt auf dem Wickelkörper aufgenommen sein. Gemäß der bevorzugten Ausführungsform der Erfindung ist aber vorgesehen, daß das erste Rollo breiter ist als das zweite Rollo.

Zur Führung des Kantenbandes jedes Rollos ist eine Führung vorgesehen, in der das Kantenband aufgenommen ist, wenn das Rollo vom Wickelkörper abgezogen ist. Die beiden Führungen für das erste und das zweite Rollo können sich dabei entweder in derselben Ebene erstrecken oder in unterschiedlichen Ebenen.

Die Erfindung wird nachfolgend anhand zweier Ausführungsformen beschrieben, die in den beigefügten Zeichnungen dargestellt sind. In diesen zeigen:
- Figur 1 schematisch ein Rollosystem nach dem Stand der Technik;
- Figur 2 in einer schematischen, perspektivischen Ansicht ein erfindunggemäßes Rollosystem;
- Figur 3 schematisch ein Rollosystem gemäß einer ersten Ausführungsform der Erfindung;
- Figur 4 schematisch einen Schnitt entlang der Ebene IV von Figur 3;
- Figur 5 schematisch eine Führung für das Rollosystem von Figur 3;
- Figur 6 schematisch ein Rollosystem gemäß einer zweiten Ausführungsform der Erfindung; und
- Figur 7 eine Führung für das Rollosystem von Figur 6.

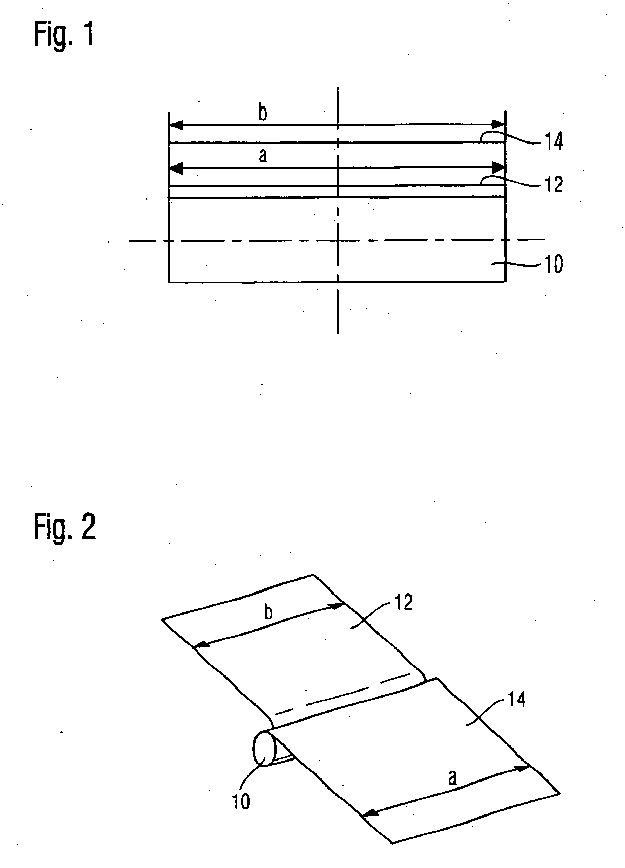

In Figur 1 ist schematisch ein Wickelkörper 10 eines herkömmlichen Rollosystems gezeigt. Auf dem Wickelkörper 10 sind zwei Rollos 12, 14 aufgenommen, wobei die Breite a des Rollos 12 gleich der Breite b des Rollos 14 ist. Daher liegen die Ränder der beiden Rollos 12, 14 aufeinander, so daß sich an diesen Stellen ein dicker Wickel ergibt.

In Figur 2 ist schematisch ein erfindungsgemäßes Rollosystem gezeigt. Auf dem Wickelkörper 10 mit einer Drehachse L sind zwei Rollos 12, 14 aufgenommen. Das erste Rollo 12 hat eine Breite a, die größer ist als die Breite b des zweiten Rollos 14. Auf diese Weise wird verhindert, daß die Ränder der beiden Rollos 12, 14 übereinander auf dem Wickelkörper 10 liegen.

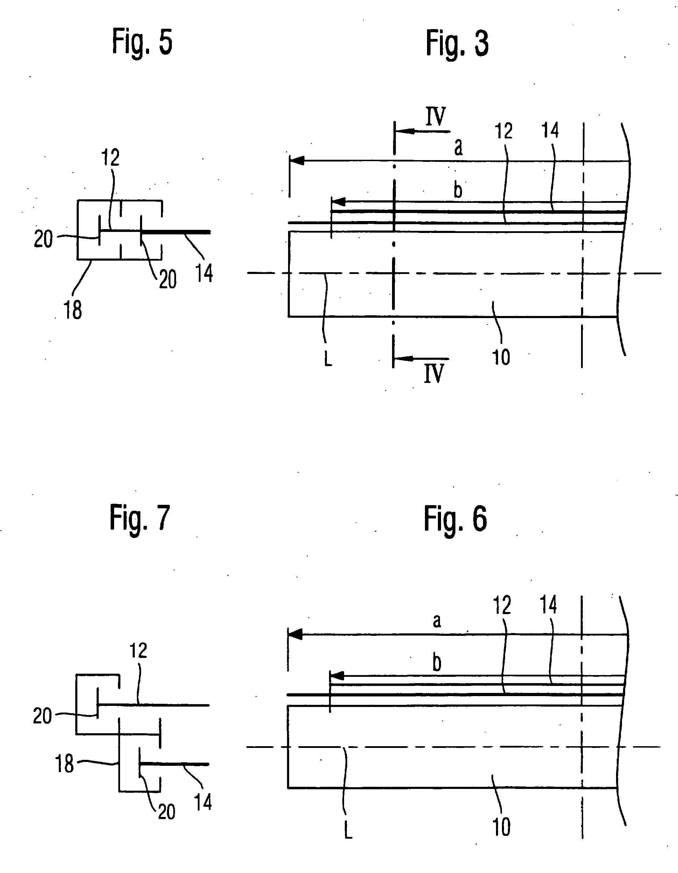

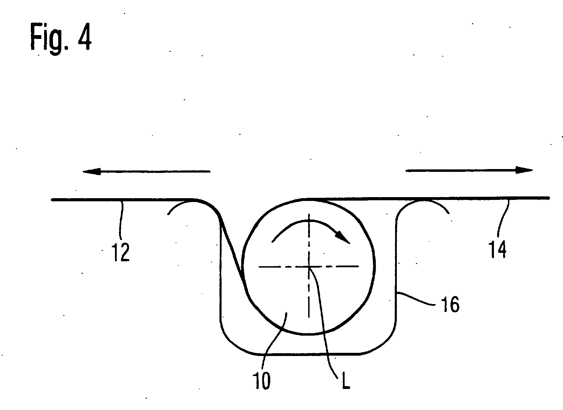

In den Figuren 3 bis 5 ist ein Rollosystem gemäß einer ersten Variante gezeigt, wobei zusätzlich ein Gehäuse 16 (siehe Figur 4) vorgesehen ist, das den Wickelkörper 10 und die darauf aufgenommenen Rollos umgibt. Außerdem ist schematisch eine Führung 18 gezeigt, in der ein Kantenband 20 aufgenommen ist, das an den beiden Rändern der Rollos 12, 14 angebracht ist. Die Führung 18 ist hier nur schematisch dargestellt; tatsächlich erstreckt sie sich auf Höhe des Außenrandes des Wickelkörpers 10, wobei sich die Führung für das Rollo 12 in der einen Richtung erstreckt, während sich die Führung für das Rollo 14 in der entgegengesetzten Richtung erstreckt.

In den Figuren 6 und 7 ist eine weitere Variante gezeigt, die sich von der vorhergehenden Variante dadurch unterscheidet, daß die beiden Rollos 12, 14 nicht in einer Ebene geführt sind, sondern in unterschiedlichen Ebenen. Die unterschiedlichen Ebenen können in einfacher Weise dadurch erhalten werden, daß das Gehäuse 16 so ausgestaltet wird, daß das Rollo 14 in einer bezüglich Figur 4 tieferen Ebene austritt.

## Patentansprüche

1. Rollosystem mit einem ersten Rollo (12), einem zweiten Rollo (14) und einem Wickelkörper (10), auf dem die beiden Rollos (12, 14) übereinanderliegend aufgenommen werden können, wobei die Ränder der Rollos (12, 14) relativ zur Drehachse (L) des Wickelkörpers (10) in axialer Richtung gegeneinander versetzt sind, **dadurch gekennzeichnet, daß** für jeden Rand eines Rollos eine Führung (18) vorgesehen ist.

2. Rollosystem nach Anspruch 1, **dadurch gekennzeichnet, daß** das erste Rollo (12) breiter ist als das zweite Rollo (14).

3. Rollosystem nach Anspruch 1 oder Anspruch 2, **dadurch gekennzeichnet, daß** die Führung für das erste Rollo (12) sich in derselben Ebene erstreckt wie die Führung für das zweite Rollo (14).

4. Rollosystem nach Anspruch 1 oder Anspruch 2, **dadurch gekennzeichnet, daß** die Führung für das erste Rollo (12) sich in einer anderen Ebene erstreckt wie die Führung für das zweite Rollo (14).

## Claims

1. A roller blind system comprising a first roller blind (12), a second roller blind (14) and a winding body (10) on which the two roller blinds (12, 14) can be accommodated so as to be superimposed, the edges of the roller blinds (12, 14) being offset relative to each other in the axial direction with relation to the axis of rotation (L) of the winding body (10), **characterised in that** a guide (18) is provided for each of the edges of a roller blind.

2. The roller blind system according to claim 1, **characterised in that** the first roller blind (12) has a width which is larger than that of the second roller blind (14).

3. The roller blind system according to claim 1 or claim 2, **characterised in that** the guide for the first roller blind (12) extends in the same plane as the guide for the second roller blind (14).

4. The roller blind system according to claim 1 or claim 2, **characterised in that** the guide for the first roller blind (12) extends in a plane which is different from that for the guide of the second roller blind (14).

## Revendications

1. Système de store comportant un premier store (12), un deuxième store (14) et un corps d'enroulement (10) sur lequel les deux stores (12, 14) peuvent être reçus superposés, les bords des stores (12, 14) étant décalés les uns par rapport aux autres en direction axiale relativement à l'axe de rotation (L) du corps d'enroulement (10), **caractérisé en ce qu'**un guidage (18) est prévu pour chaque bord d'un store.

2. Système de store selon la revendication 1, **caractérisé en ce que** le premier store (12) est plus large que le deuxième store (14).

3. Système de store selon la revendication 1 ou la revendication 2, **caractérisé en ce que** le guidage pour le premier store (12) s'étend dans le même plan que le guidage pour le deuxième store (14).

4. Système de store selon la revendication 1 ou la revendication 2, **caractérisé en ce que** le guidage pour le premier store (12) s'étend dans un autre plan que le guidage pour le deuxième store (14).
